# EUROPÄISCHE PATENTANMELDUNG

(11) **EP 0 844 311 A1**
(43) Veröffentlichungstag der Anmeldung: **27.05.1998**
(21) Anmeldenummer: 97120392.2
(22) Anmeldetag: 20.11.1997
(51) Int. Cl.: C22C 32/00, C22C 1/10

(54) **Hochwarmfester Aluminiumwerkstoff, insbesondere für den kolbenbau**

(30) Priorität: 21.11.1996 DE 19648261; 06.06.1997 DE 19723868
(71) Anmelder: Seilstorfer GmbH & Co. Metallurgische Verfahrenstechnik KG, 83527 Haag-Winden (DE)
(72) Erfinder: Seilstorfer, Helmut Dipl,-Ing., 81679 München (DE)
(74) Vertreter: WILHELMS, KILIAN & PARTNER Patentanwälte

(57) **Zusammenfassung**

Gegenstand der Erfindung ist ein hochwarmfester Aluminiumwerkstoff, insbesondere für Kolben von Verbrennungsmotoren, erhalten durch mechanisches Legieren von Pulvern von Aluminium und einem oder mehreren der Aluminiumlegierungselemente Si, Mg, Zn, Cu, Ni, Ti, C, wobei die Teilchengröße des Aluminiums und der Aluminiumlegierungselemente bis etwa 100 µm beträgt und der Anteil an Legierungselementen nicht größer als 25 Gew.-% des Aluminiumanteils ist, sowie von einem oder mehreren der Dispersoide Al₂O₃, TiC, SiO₂, SiC, wobei die Teilchengröße des oder der Dispersoide bis etwa 50 µm beträgt und der Anteil an Dispersoiden an der Gesamtmenge zwischen 7,5 und 50 Gew.-% beträgt, kaltes Vorpressen des Pulvergemisches und heißisostatisches Verdichten des vorgepreßten Pulvergemisches auf theoretische Dichte.

## Beschreibung

Die Erfindung liegt auf dem Gebiet der Kolben von Verbrennungsmotoren.

Kolben, die geringe Masse haben sollen, wie es z.B. im Kfz-Motorenbau der Fall ist, werden heutzutage vorzugsweise aus warmaushärtbaren Aluminiumlegierungen hergestellt.

Während diese Werkstoffe hinsichtlich Wärmeleitfähigkeit, Dichte, Wärmedehnzahl, Zerspanungseigenschaften und Wirtschaftlichkeit durchaus zufriedenstellend sind, stoßen sie hinsichtlich ihrer Warmfestigkeit in Bezug auf die Anforderungen an Kolben im modernen Automobilbau an Grenzen. Hohe Verdichtungen und auch die Verwendung von bleifreiem Benzin fuhrt zu höheren Verbrennungstemperaturen, die höhere Temperaturen am Kolbenboden zur Folge haben. Zudem haben diese Werkstoffe niedrige Zähigkeitswerte, sind also spröde.

Es besteht daher ein Bedürfnis nach einem Werkstoff, welcher möglichst ohne Einbußen hinsichtlich der anderen oben genannten für Kolben wichtigen Eigenschaften und insbesondere bei nicht schlechterer Wirtschaftlichkeit, d.h. geringem Preis, eine höhere Warmfestigkeit als die bekannten Leichtmetallgußlegierungen hat.

Einem sehr alten Vorschlag (CH-PS 259 878) entspricht es, Kolben aus einem oberflächlich oxidierten Leichtmetallpulver herzustellen, wobei das oberflächlich oxidierte Leichtmetallpulver, bei dem mindestens 50 Gew.-% der Pulverteilchen kleiner als 2 µm sind, zuerst kaltgepreßt und dann warmverformt, beispielsweise stranggepreßt, wird. Ferner wird auch zusätzlich zum Kaltpressen ein Sinterschritt vorgeschlagen (DE-PS 837 467).

Auch bei einem zusätzlichen Sintern ist jedoch zur Erzielung eines dichten Werkstoffs eine abschließende Warmverformung erforderlich, da das Oxid, dort Al₂O₃, beim Sintern nicht benetzbar ist und damit eine erhebliche Restporosität verbleibt.

Der nach diesen bekannten Verfahren gewonnene Werkstoff zeigt zwar eine bemerkenswerte Warmfestigkeit, er ist aber wegen der hohen Feinheit des Aluminiumpulvers und im Hinblick auf die zahlreichen Verfahrensschritte bei seiner Herstellung extrem teuer, wobei auch noch zu berücksichtigen ist, daß wegen des hohen Feinanteils alle Vorgänge unter inerten Bedingungen durchgeführt werden, auch um pyrophore Reaktionen zu vermeiden.

Aufgabe der Erfindung ist es, einen Kolbenwerkstoff zu schaffen, welcher bei höheren Temperaturen einsetzbar ist als die üblichen Aluminiumlegierungswerkstoffe, in den übrigen kolbenrelevanten Eigenschaften dem bekannten für Kolben verwendeten Aluminiumlegierungswerkstoffen nicht nachsteht und billig verfügbar ist.

Diese Aufgabe wird durch einen hochwarmfesten Aluminiumwerkstoff gelöst, wie er in den Ansprüchen 1 und 2 definiert ist.

Vorteilhafte Weiterbildungen der Erfindung sind Gegenstand der Ansprüche 3 bis 10.

Gegenstand der Erfindung ist auch ein Kolbenboden gemäß Anspruch 11 sowie ein Verfahren zur Herstellung eines Kolbens gemäß Anspruch 12.

Unter mechanischem Legieren ist das Mischen von Pulvern der Einzelkomponenten, also von Aluminiumpulver und Al₂O₃-Pulver im Falle des Anspruchs 2 oder, im Falle des Anspruchs 1, von Aluminiumpulver und von Pulver bzw. Pulvern von einem oder mehreren der weiteren im Anspruch 1 genannten Aluminiumlegierungselemente und von Pulver bzw. Pulvern von einem oder mehreren der genannten Dispersoide gemeint. Das gemischte Pulver wird dann zu einem Preßkörper kalt vorgepreßt. Das heißisostatische Fressen erfolgt in der üblichen Weise. Das heißt, der Vorpreßling wird in eine Kapsel, vorzugsweise aus Aluminium, verbracht, die Kapsel evakuiert und verschlossen und die evakuierte und verschlossene Kapsel mit dem darin enthaltenen Vorpreßling dann in einem Autoklaven unter üblichen Parametern, d.h. bei einem Druck zwischen 700 und 1000 bar und einer Temperatur zwischen 400 und 600°C heißisostatisch gepreßt. Die Haltezeit beträgt typischerweise 4 bis 6 Stunden. Der sich so ergebende Körper hat theoretische Dichte und bereits die gewünschten Werkstoffeigenschaften.

Eine weitere Umformung nach dem heißisostatischen Fressen, beispielsweise durch Strangpressen, ist nicht erforderlich. Wenn sie trotzdem erfolgt, so geschieht dies unter Formgebungsgesichtspunkten, nicht aber um die Werkstoffeigenschaften nochmals entscheidend zu beeinflussen, wie dies gemäß CH-PS 2 59 878 oder DE-PS 837 467 der Fall ist.

Vorzugsweise wird das Al₂O₃ als Edelkorund vorgesehen, also hergestellt elektrothermisch über die Schmelze. Dies ergibt einen besseren Reinheitsgrad. Weiterhin hat der Edelkorund eine geringe Reaktionsfähigkeit, d.h. das Zusammenklumpen der einzelnen Partikel wird vermieden.

Der Werkstoff verdankt seine höhere Warmfestigkeit dem Al₂O₃-Anteil, wie dies auch bei den Werkstoffen gemäß den beiden oben genannten Patentschriften der Fall ist. Anders als bei der Sinterung tritt ein Problem mangelnder Benetzbarkeit des Aluminiumoxids nicht auf. Die schlechte Benetzbarkeit von Aluminiumoxid ist für die hohe Restporosität beim Sintern oberflächlich oxidierter Aluminium- oder Aluminiumlegierungspulver verantwortlich. Der zur Abhilfe teilweise beschrittene Weg einer Flüssigphasensinterung steht nur für Aluminiumlegierungen nicht aber Reinaluminium zur Verfügung, weil nur bei jenen im Zustandsdiagramm ein Zweiphasengebiet vorhanden ist, er führt aber zu irreversiblen Entmischungszuständen, die den Werkstoffeigenschaften nicht zuträglich sind.

Die folgenden Tabellen 1 bis 3 geben mechanische Kennwerte für einen Werkstoff gemäß Patentanspruch 1 bei einem Gehalt von 15 % Al₂O₃, 30 % Al₂O₃ bzw. 50 % Al₂O₃ wieder (Angaben in Gew.-%).

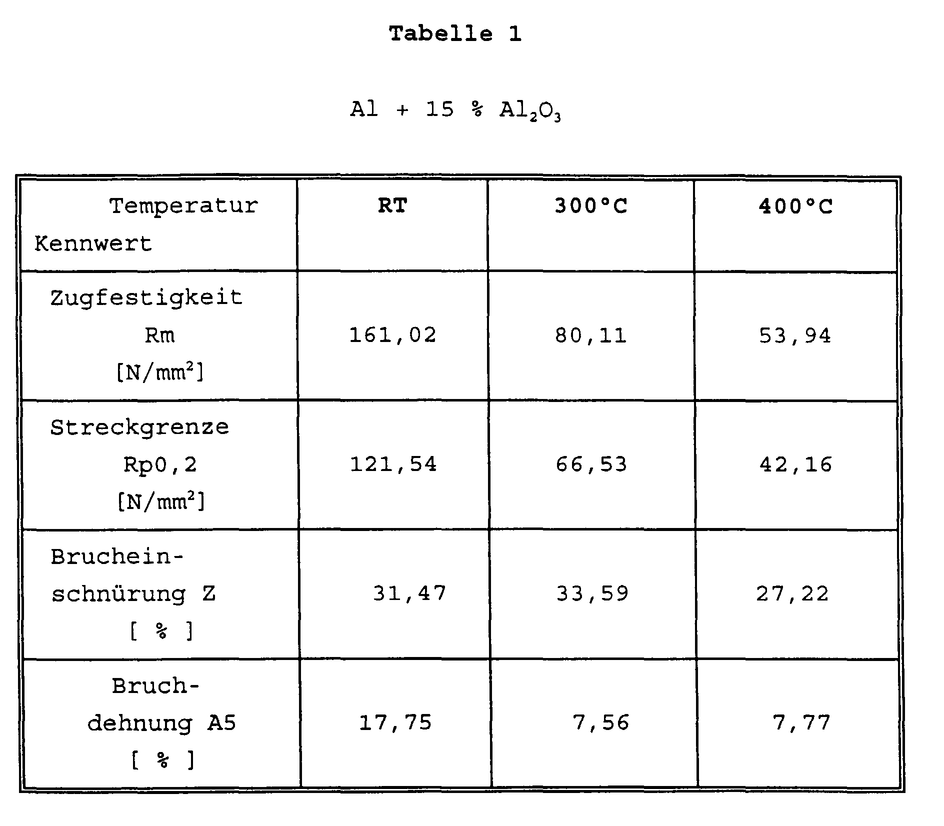

**Tabelle 2**

| Al + 30 % Al₂O₃ | | | |
|---|---|---|---|
| | **RT** | **300°C** | **400°C** |
| Zugfestigkeit Rm [N/mm²] | 192,51 | 90,49 | 58,37 |
| Streckgrenze Rp0,2 [N/mm²] | 121,22 | 72,75 | 47,75 |
| Brucheinschnürung Z [ % ] | 27,15 | 30,94 | 26,89 |
| Bruchdehnung A5 [ % ] | 15,1 | 9,96 | 8,81 |

**Tabelle 3**

| Al + 50 % Al₂O₃ | | | |
|---|---|---|---|
| | **RT** | **300°C** | **400°C** |
| Zugfestigkeit Rm [N/mm²] | 203 | 128,09 | 68,27 |
| Streckgrenze Rp0,2 [N/mm²] | 185,78 | --- | 66,99 |
| Brucheinschnürung Z [ % ] | 1,34 | 1,63 | 1,65 |
| Bruchdehnung A5 [ % ] | 1,56 | 1,67 | 0,97 |

Die folgende Tabelle 4 zeigt die mechanischen Kennwerte entsprechend den Tabellen 1 bis 3 für eine Ausführungsform gemäß Anspruch 1, nämlich eine Aluminiumlegierungsmatrix mit 5 % Cu, 3 % Ni, Rest Al und 30 % Al₂O₃. Diese Legierung wäre theoretisch aushärtbar. Die Werte gelten für den nicht ausgehärteten Zustand.

**Tabelle 4**

| Matrix: 5 % Cu, 3 % Ni, Rest Al; 30 % Al₂O₃ | | | |
|---|---|---|---|
| | **RT** | **300°C** | **400°C** |
| Zugfestigkeit Rm [N/mm²] | 157,73 | 104,52 | 50,92 |
| Streckgrenze Rp0,2 [N/mm²] | 106,12 | 81,1 | ---- |
| Brucheinschnürung Z [ % ] | 1,34 | 6,2 | 3,28 |
| Bruchdehnung A5 [ % ] | 1,76 | 1,94 | 2,36 |

Die in den Tabellen 1 bis 4 angegebenen Werte unterliegen keiner Alterung.

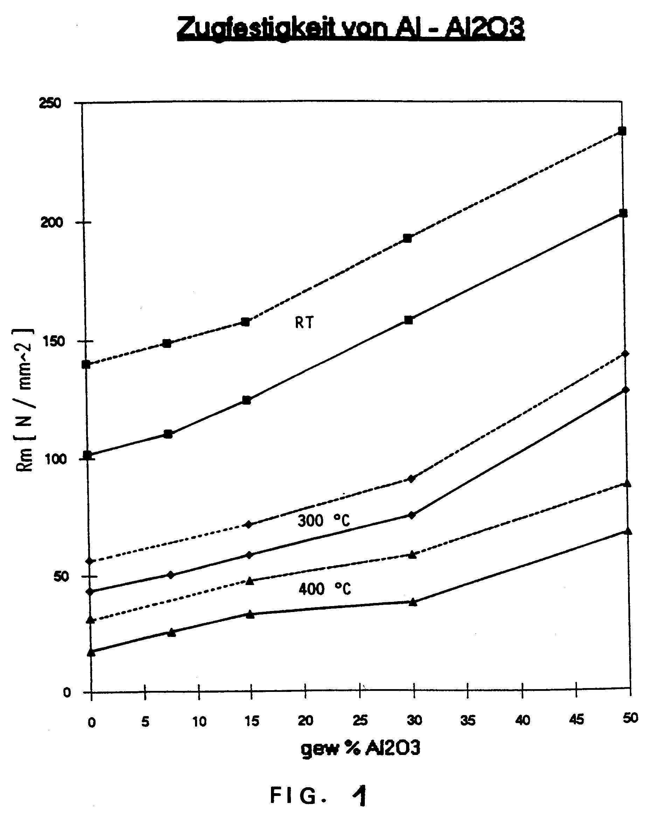

Die beigefügte Fig. 1 gibt die Zugfestigkeit für einen Werkstoff gemäß Patentanspruch 1 in Abhängigkeit vom gewichtsprozentualen Anteil von Al₂O₃ für verschiedene Temperaturen wieder.

Fig. 1 zeigt, daß bei allen Temperaturen die Zugfestigkeit des Werkstoffes mit zunehmendem Anteil an Al₂O₃ zunimmt. Dargestellt sind Verhältnisse für Raumtemperatur, 300°C und 400°C, wobei jeweils eine durchgehende Kurve und die darüberliegende gestrichelte Kurve die Streubreite bestimmen.

Fig. 2 stellt die oberen und unteren Grenzen der Zugfestigkeitsbereiche vor und nach 200 Stunden Alterung bei der Prüftemperatur in Abhängigkeit von der Temperatur für folgende bekannte Kolbengußlegierungen dar:

| | | | | | |
|---|---|---|---|---|---|
| 3210 | Al | Si11 | Cu1 | Mg1 | Ni1 |
| S2 | Al | Si11 | Cu3,5 | Mg1 | Ni2 |
| B1 | Al | Si12 | Cu5 | Mg1 | Ni2 |

Die beiden Kurven, auf denen die quadratisch gezeichneten Punkte liegen, begrenzen den Bereich für die Zugfestigkeit nach 200 Stunden Alterung bei Prüftemperatur dar, die beiden übrigen Kurven, auf denen die kreisförmig gezeichneten Punkte liegen, begrenzen den Bereich für die Zugfestigkeit vor Alterung.

Es zeigt sich deutlich ein mit der Temperatur zunehmender alterungsbedingter Zugfestigkeitsabfall, der ab einer Temperatur von 200°C besonders ausgeprägt ist.

Bei 300°C liegt bei den bekannten Legierungen nach Alterung die Zugfestigkeit im Mittel bei 75 N/mm². Bei 350°C liegt dieser Wert bei 30 N/mm².

Bereits bei einem Al₂O₃-Anteil von 30 % bei der erfindungsgemäßen Legierung liegt die Zugfestigkeit bei 300°C - alterungsfrei - immer noch bei 90 N/mm². Das entspricht in etwa dem unteren Wert der Bandbreite getesteter bekannter Legierungen gemäß Fig. 1 vor Alterung. Mit zunehmender Temperatur werden die Unterschiede zugunsten des erfindungsgemäßen Werkstoffs immer größer.

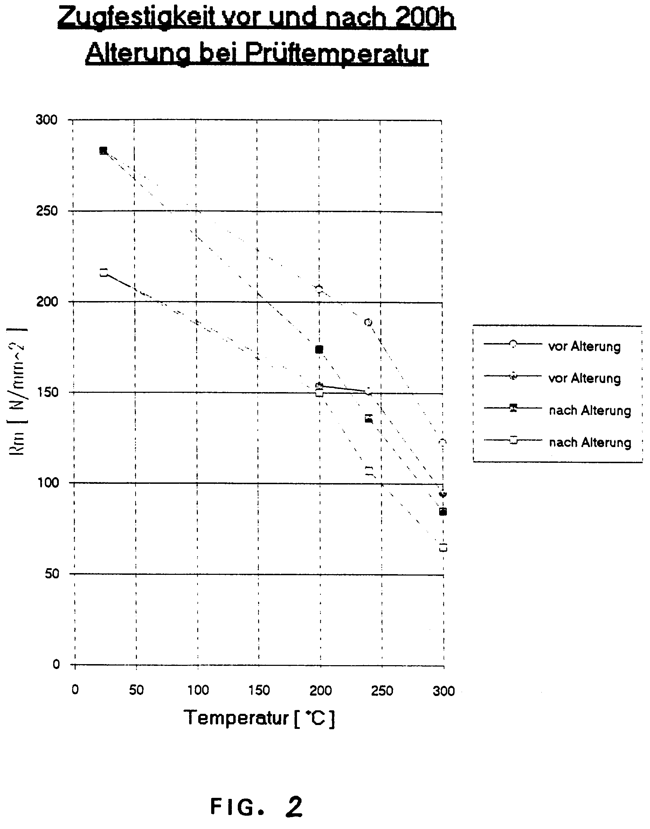

Bei der erfindungsgemäßen Legierung gemäß Tabelle 2 beträgt die Bruchdehnung bei 300°C ca. 10 %, was etwa dem zehnfachen Wert bekannter Gußlegierungen entspricht. Bei den Legierungen gemäß Tabelle 3 und 4 nähert sich die Bruchdehnung zwar den Werten der besten bekannten Gußlegierungen an, die Zugfestigkeit bei 300°C liegt aber deutlich über derjenigen der bekannten Legierungen, wie ein Vergleich mit Fig. 2 zeigt.

Ein weiterer Vorteil liegt in der besseren Wärmeleitfähigkeit der erfindungsgemäßen Legierungen. Eine hohe Wärmeleitfähigkeit ist für die rasche Abfuhr der Verbrennungswärme auch über den Kolben notwendig. Der aus Gründen besserer Gießbarkeit gewählte hohe Siliziumanteil beschränkt bei den herkömmlichen Kolbengußlegierungen die Wärmeleitfähigkeit.

Es kann bei einem Kolben aus herstellungstechnischen und/oder Werkstoffgründen von Vorteil sein, den Kolbenboden aus dem erfindungsgemäßen Werkstoff und den Kolbenschaft aus einem anderen Werkstoff oder jedenfalls getrennt vom Kolbenboden herzustellen. Die Verbindung zwischen Kolbenboden und Kolbenschaft muß auch unter thermischer Wechselbeanspruchung dauerhaft sein und aus Gründen der Ableitung der Verbrennungswärme darf sich zwischen Kolbenboden und Kolbenschaft kein erhöhter Wärmewiderstand ausbilden.

Erfindungsgemäß wird dies folgendermaßen erreicht: eine Scheibe aus dem erfindungsgemäßen Werkstoff wird mit einer Fläche auf eine komplementäre Stirnfläche eines vorzugsweise zylindrischen Grundkörpers aufgelegt. Scheibe und Grundkörper werden danach an dem umlaufenden Rand abdichtend elektronenstrahlverschweißt (ein Vorgang, der unter Vakuum erfolgt). Der so gebildete Körper wird in einen Autoklaven verbracht und dort unter den üblichen Werten für Druck und Temperatur, also beispielsweise den eingangs für die Herstellung der erfindungsgemäßen Legierungen genannten, heißisostatisch gepreßt.

Es wird dabei im Hinblick auf eine einfachere Elektronenstrahlverschweißung bevorzugt, den erfindungsgemäßen Kolbenbodenwerkstoff in einer zylindrischen Aluminiumkapsel herzustellen und die Kapselreste beim Herstellen einer Scheibe aus dem erfindungsgemäßen Werkstoff nicht zu entfernen. Die Scheibe weist dann einen sie umgebenden Ring aus Reinaluminium auf, an dem sich die spätere Elektronenstrahlverschweißung von Grundkörper und Kolbenbodenkörper vollzieht. Das Schweißen auf Al₂O₃-freien Teilen verbessert die Qualität und Dichtigkeit der Elektronenstrahlschweißung und vereinfacht ihre Durchführung.

In einem spanenden Fertigbearbeitungsschritt nach dem heißisostatischen Pressen, in dem auch Nuten für die Kolbenringe in dem zum Kolbenschaft werdenden Grundkörper eingebracht werden können, wird der Reinaluminiumring um die Scheibe, die zum Kolbenboden wird, mit abgedreht.

Versuche haben ergeben, daß die Bindefestigkeit zwischen Grundkörper und Kolbenboden beispielsweise bei einer Bindung Reinaluminium/Al + 7,5 % Al₂O₃ 80 % der Reinaluminiumfestigkeit erreicht.

Eine Gradientenstruktur ausgehend von der Oberfläche des Kolbenbodens zum Kolbenschaft hin kann erreicht werden, indem das oben beschriebene Verfahren unter Übereinanderlegung mehrerer Scheiben aus dem erfindungsgemäßen Kolbenbodenwerkstoff unterschiedlicher Zusammensetzung durchgeführt wird.

Nach dem erfindungsgemäßen Verfahren können auch Kühlkanäle im Inneren des Kolbens in Kolbenbodennähe leicht ausgeführt werden. Sie lassen sich auslegen, indem die Stirnfläche des Grundkörpers, auf die die Kolbenbodenscheibe zu legen ist, vorher entsprechend eingestochen wird. Falls es sich bei dem Grundkörper um ein Gußteil handelt, fallen bei entsprechender Ausbildung der Gießform die Kühlkanäle von selbst an. Sind Kühlkanäle in dieser Weise vorhanden, so sollte beim heißisostatischen Pressen des Verbundkörpers bei sonst gleichen Parametern für das heißisostatische Pressen der Druck auf etwa 50 bis 100 bar abgesenkt werden.

Eine radiale Gradientenstruktur läßt sich in einer Kolbenbodenscheibe erreichen, indem aneinander angepaßte ringzylindrische Vorpreßlinge unterschiedlicher Zusammensetzung ineinander gesteckt werden und dieser Aufbau heißisostatisch verdichtet wird.

Sollen die Nuten für die Kolbenringe in Kolbenbodenwerkstoff erstellt werden, so kann ein Ring aus Kolbenbodenwerkstoff, der auf einen zurückgesetzten Abschnitt des Kolbenschaftteils aufgesteckt ist, nach dem gleichen Verfahren, wie oben für die Verbindung Kolbenboden-Kolbenschaft beschrieben, verbunden werden.

Der pulvermetallurgisch durch heiß-isostatisches Pressen gewonnene, insbesondere mit Al₂O₃ als Dispersoid verstärkte Aluminiumwerkstoff erweist sich in seiner Temperaturbeständigkeit und mechanischen Eigenschaften, wie Zugfestigkeit, anderen Aluminiumwerkstoffen als überlegen.

Der gegenständliche Werkstoff ist daher prädestiniert als Ersatz für herkömmliche Aluminiumwerkstoffe insbesondere dort, wo diese im Grenzbereich ihrer thermischen Belastbarkeit eingesetzt sind.

Im Motoren- und Triebswerksbau ist der gegenständliche Werkstoff daher nicht nur für Kolbenböden, sondern auch für Verbrennungskammern, Zylinderköpfe, Verdichterschaufeln von Strahltriebwerken, Dichtungen für Gasturbinen und dergleichen besonders geeignet. Je nach Bedarf kann dabei der gegenständliche Aluminiumwerkstoff nur an der Oberfläche oder durchgängig im gesamten Volumen des betreffenden Bauteils Verwendung finden.

Im Fahrzeugbau ist es bekannt, aus Gewichtsersparnisgründen und auch zur Verbesserung der Bremswirkung für Scheibenbremsen Bremsscheiben aus Aluminiumwerkstoff zu verwenden. Bremsscheiben werden im Betrieb heiß. Auch hier ergibt die Verwendung des gegenständlichen Aluminiumwerkstoffs anstelle herkömmlicher eine Verbesserung der thermischen Belastbarkeit der Bremsscheibe. Bevorzugt ist die Bremsscheibe als Verbund ausgeführt mit dem gegenständlichen Aluminiumwerkstoff an den mit den Bremsklötzen in Berührung kommenden Flächen die Bremsscheibe und einem Gußteil aus einem anderen Aluminiumwerkstoff im übrigen. Bevorzugt ist die Bremsscheibe als Verbund ausgeführt mit dem gegenständlichen Aluminiumwerkstoff an den mit den Bremsklötzen in Berührung kommenden Flächen die Bremsscheibe und einem Gußteil aus einem anderen Aluminiumwerkstoff im übrigen.

Wegen der hohen Korrosionsbeständigkeit und hohen Wärmebeständigkeit ist ein weiteres bevorzugtes Anwendungsgebiet des gegenständlichen Werkstoffes das der Wärmetauscher und Rohrleitungen für hohe Temperatur anstelle herkömmlicher Aluminiumwerkstoffe.

In Enteisungsanlagen finden Aluminiumwerkstoffe wegen ihrer hohen elektrischen Leitfähigkeit Verwendung. Die elektrische Leitfähigkeit des gegenständlichen Aluminiumwerkstoffs ist ebenfalls hoch, seine Temperaturbeständigkeit höher als bekannt bei bekannten Aluminiumwerkstoffen, so daß auch hier sein Einsatz gegenüber den herkömmlichen bevorzugt ist.

Im Kernkraftwerksbau werden neutronendurchlässige Teile aus Aluminiumwerkstoff gefertigt. Diese Teile unterliegen thermischen Belastungen, so daß mit Vorteil der gegenständlichen Aluminiumwerkstoff herkömmliche ersetzt.

## Patentansprüche

1. Hochwarmfester Aluminiumwerkstoff, insbesondere für Kolben von Verbrennungsmotoren, erhalten durch mechanisches Legieren von Pulvern von Aluminium und einem oder mehreren der Aluminiumlegierungselemente Si, Mg, Zn, Cu, Ni, Ti, C, wobei die Teilchengröße des Aluminiums und der Aluminiumlegierungselemente bis etwa 100 µm beträgt und der Anteil an Legierungselementen nicht größer als 25 Gew.-% des Aluminiumanteils ist, sowie von einem oder mehreren der Dispersoide Al₂O₃, TiC, SiO₂, SiC, wobei die Teilchengröße des oder der Dispersoide bis etwa 50 µm beträgt und der Anteil an Dispersoiden an der Gesamtmenge zwischen 7,5 und 50 Gew.-% beträgt, kaltes Vorpressen des Pulvergemisches und heißisostatisches Verdichten des vorgepreßten Pulvergemisches auf theoretische Dichte.

2. Hochwarmfester Aluminiumwerkstoff, insbesondere für Kolben von Verbrennungsmotoren, erhalten durch mechanisches Legieren von Pulvern von Aluminium und Al₂O₃, wobei die Teilchengröße des Aluminiums bis etwa 100 µm und die Teilchengröße des Al₂O₃ bis etwa 50 µm beträgt und der Anteil des Al₂O₃ an der Gesamtmenge zwischen 7,5 und 50 Gew.-% beträgt, kaltes Vorpressen des Pulvergemisches und heißisostatisches Verdichten des vorgepreßten Pulvergemischs.

3. Aluminiumwerkstoff nach Anspruch 1 oder 2, dadurch gekennzeichnet, daß der Dispersoid- bzw. Al₂O₃-Anteil zwischen 30 und 50 Gew.-% beträgt.

4. Aluminiumwerkstoff nach Anspruch 1 oder 3, dadurch gekennzeichnet, daß die Teilchengröße des Aluminiums und der Aluminiumslegierungselemente bis etwa 50 µm beträgt.

5. Aluminiumwerkstoff nach Anspruch 1 oder 3, dadurch gekennzeichnet, daß die Teilchengröße des Aluminiums und der Aluminiumslegierungselemente bis etwa 25 µm beträgt.

6. Aluminiumwerkstoff nach Anspruch 2 oder 3, dadurch gekennzeichnet, daß die Teilchengröße des Aluminiums bis etwa 50 µm beträgt.

7. Aluminiumwerkstoff nach Anspruch 2 oder 3, dadurch gekennzeichnet, die Teilchengröße des Aluminiums bis etwa 15 µm beträgt.

8. Aluminiumwerkstoff nach Anspruch 4 oder 5, dadurch gekennzeichnet, daß die Teilchengröße des oder der Dispersoide bis etwa 20 µm beträgt.

9. Aluminiumwerkstoff nach Anspruch 6 oder 7, dadurch gekennzeichnet, daß die Teilchengröße des Al₂O₃ bis etwa 20 µm beträgt.

10. Aluminiumwerkstoff nach irgendeinem der vorstehenden Ansprüche, dadurch gekennzeichnet, daß das Al₂O₃ Edelkorund ist.

11. Kolbenboden eines Kolbens für einen Verbrennungsmotor, dadurch gekennzeichnet, daß der Kolbenboden aus einem Aluminiumwerkstoff gemäß irgendeinem der Ansprüche 1 bis 10 besteht.

12. Verfahren zur Herstellung eines Kolbens in Verbundbauweise, mit folgenden Verfahrensschritten:
Herstellen einer Kolbenbodenscheibe aus einem Werkstoff gemäß irgendeinem der Ansprüche 1 bis 10, wobei die Kolbenbodenscheibe eine Stirnfläche aufweist,
Herstellen eines Kolbenschaftteils mit einer zur Stirnfläche der Kolbenbodenscheibe komplementären Fläche,
Zusammenfügen von Kolbenbodenscheibe und Kolbenschaftteil an diesen Flächen,
Elektronenstrahlverschweißen von Kolbenbodenscheibe und Kolbenschaftteil längs des Randes der zusammengefügten Flächen,
heißisostatisches Pressen der verschweißten Teile zu einem Verbundteil,
Fertigbearbeiten des heißisostatisch gepreßten Verbundteils zu einem Verbundkolben.

13. Verwendung eines Aluminiumwerkstoffs nach irgendeinem der Ansprüche 1 bis 10 als Ersatz für thermisch hochbelastete herkömmliche Aluminiumwerkstoffe im Motoren- und Triebswerksbau.

14. Verwendung eines Aluminiumwerkstoffs nach irgendeinem der Ansprüche 1 bis 10 für Wärmetauscher und chemisch oder thermisch belastete Rohre aus Aluminiumwerkstoff.

15. Verwendung eines Aluminiumwerkstoffs nach irgendeinem der Ansprüche 1 bis 10 für Bremsscheiben von Scheibenbremsen.

16. Verwendung eines Aluminiumwerkstoffs nach irgendeinem der Ansprüche 1 bis 10 für neutronendurchlässige Teile aus Aluminiumwerkstoff.

17. Verwendung eines Aluminiumwerkstoffs nach irgendeinem der Ansprüche 1 bis 10 für Enteisungsanlagen.
